(19) **Europäisches Patentamt**
**European Patent Office**
**Office européen des brevets**

(11) **EP 1 745 625 B1**

(12) **EUROPEAN PATENT SPECIFICATION**

(45) Date of publication and mention of the grant of the patent:
**23.01.2008 Bulletin 2008/04**

(51) Int Cl.:
***H04L 25/06*** (2006.01)

(21) Application number: **05740304.0**

(22) Date of filing: **28.04.2005**

(86) International application number:
**PCT/US2005/014428**

(87) International publication number:
**WO 2005/114936 (01.12.2005 Gazette 2005/48)**

(54) **CARRIER PHASE AMBIGUITY CORRECTION VIA DC OFFSET**

TRÄGERPHASEN-MEHRDEUTIGKEITSKORREKTUR ÜBER GLEICHSTROMOFFSET

CORRECTION D'AMBIGUITE DE PHASE DE PORTEUSE PAR DECALAGE EN CONTINU

(84) Designated Contracting States:
**DE FR GB**

(30) Priority: **12.05.2004 US 570291 P**

(43) Date of publication of application:
**24.01.2007 Bulletin 2007/04**

(73) Proprietor: **Thomson Licensing**
**92100 Boulogne-Billancourt (FR)**

(72) Inventors:
• **EDDE, Gabriel, Alfred**
**Indianapolis, IN 46220 (US)**
• **MARKMAN, Ivonete**
**Carmel, Indiana 46032 (US)**

(74) Representative: **Esselin, Sophie et al**
**MARKS & CLERK France**
**Conseils en Propriété Industrielle**
**31-33, avenue Aristide Briand**
**94117 Arcueil Cedex (FR)**

(56) References cited:
**WO-A-02/41595**          **WO-A-20/04068815**
**US-A- 4 267 591**          **US-B1- 6 222 891**
**US-B1- 6 298 100**

• **PATENT ABSTRACTS OF JAPAN vol. 2003, no. 12, 5 December 2003 (2003-12-05) & JP 2003 224614 A (MITSUBISHI ELECTRIC CORP), 8 August 2003 (2003-08-08)**

**Description**

BACKGROUND OF THE INVENTION

The present invention generally relates to communications systems and, more particularly, to a receiver.

In modern digital communication systems like the ATSC-DTV (Advanced Television Systems Committee-Digital Television) system (e.g., see, United States Advanced Television Systems Committee, "ATSC Digital Television Standard", Document A/53, September 16, 1995 and "Guide to the Use of the ATSC Digital Television Standard", Document A/54, October 4, 1995), advanced modulation, channel coding and equalization are usually applied. In ATSC-DTV, the modulation system consists of suppressed carrier vestigial sideband (VSB) modulation with an added small in-phase pilot at the suppressed carrier frequency, 11.3dB below the average signal power. Unfortunately, in processing the received ATSC-DTV signal, receiver demodulator techniques generally have intrinsic carrier phase and/or symbol timing ambiguities due to their phase and time detector design.

SUMMARY OF THE INVENTION

In accordance with the principles of the invention, a receiver comprises a filter for providing at least one DC-offset level associated with a signal; and a phase corrector for correcting a phase of the signal as a function of the at least one DC-offset level.

In an embodiment of the invention, an ATSC receiver comprises a carrier tracking loop (CTL), a filter, a look-up table and a rotator. The CTL provides a baseband signal having in-phase and quadrature signal components. The filter provides a DC-offset level associated with each component to the look-up table, which, in response thereto, provides a phase adjustment signal to the rotator. The latter then rotates the baseband signal as a function of the phase adjustment signal for correcting for carrier phase ambiguity.

In another embodiment of the invention, an ATSC receiver comprises a carrier tracking loop (CTL), a filter and a phase corrector element. The CTL provides a baseband signal having in-phase and quadrature signal components. The filter provides a DC-offset level associated with each component to the phase corrector element. The latter has at least two modes of operation: a track mode and a hold mode. In the track mode, the phase corrector element tracks the phase ambiguity of the baseband signal and adjusts the phase of the baseband signal as a function of the DC-offset level associated with each component of the baseband signal. In the hold mode, the phase corrector element does not track the phase ambiguity of the baseband signal and applies a fixed phase adjustment to the baseband signal.

BRIEF DESCRIPTION OF THE DRAWINGS

FIG. 1 shows a block diagram of a prior art ATSC receiver;
FIG. 2 shows an illustrative high-level block diagram of a receiver embodying the principles of the invention;
FIGs. 3 and 4 show illustrative portions of a receiver embodying the principles of the invention;
FIG. 5 shows Table One;
FIG. 6 shows Table Two; and
FIGs. 7 and 8 show illustrative flow charts in accordance with the principles of the invention.

**DETAILED DESCRIPTION**

Other than the inventive concept, the elements shown in the figures are well known and will not be described in detail. Also, familiarity with television broadcasting and receivers is assumed and is not described in detail herein. For example, other than the inventive concept, familiarity with current and proposed recommendations for TV standards such as NTSC (National Television Systems Committee), PAL (Phase Alternation Lines), SECAM (SEquential Couleur Avec Memoire) and ATSC (Advanced Television Systems Committee) (ATSC) is assumed. Likewise, other than the inventive concept, transmission concepts such as eight-level vestigial sideband (8-VSB), Quadrature Amplitude Modulation (QAM), and receiver components such as a radio-frequency (RF) front-end, or receiver section, such as a low noise block, tuners, demodulators, correlators, leak integrators and squarers is assumed. Similarly, formatting and encoding methods (such as Moving Picture Expert Group (MPEG)-2 Systems Standard (ISO/IEC 13818-1)) for generating transport bit streams are well-known and not described herein. It should also be noted that the inventive concept may be implemented using conventional programming techniques, which, as such, will not be described herein. Finally, like-numbers on the figures represent similar elements.

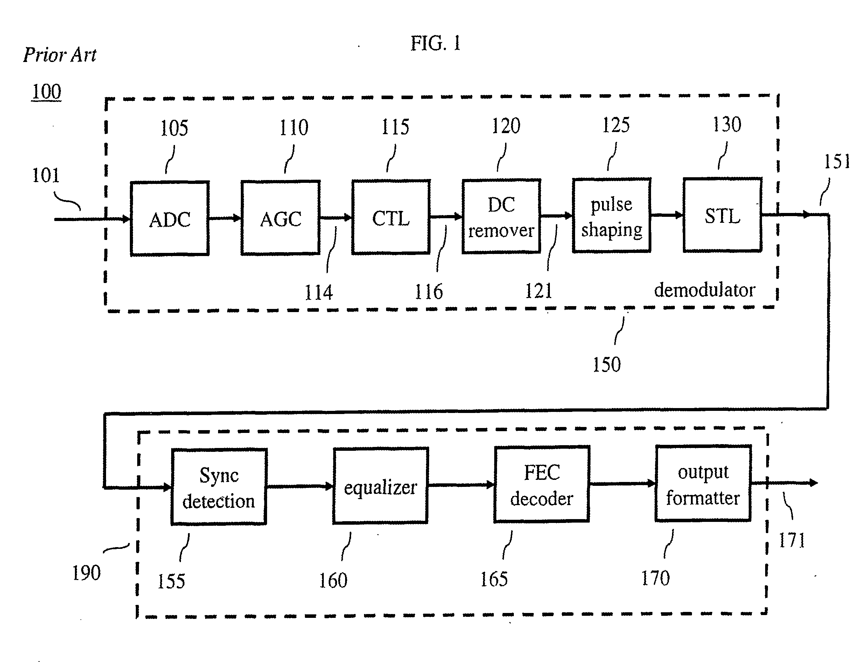

Before describing the inventive concept, a block diagram of a prior art receiver 100 is shown in FIG. 1 for use in an ATSC-DTV system. As known in the art, some of the signal paths described below are complex. Receiver 100 comprises a demodulator 150 and signal processing element 190. Input signal 101 represents a digital VSB modulated signal in accordance with the above-mentioned "ATSC Digital Television Standard" and is centered at a specific IF (Intermediate Frequency) of $F_{IF}$ Hertz or near baseband. Demodulator 150 (described further below) demodulates input signal 101 and provides demodulated signal 151 to signal processing element 190. The latter processes demodulated signal 151 to provide output signal 171, which is representative of MPEG-2 serial or parallel data packets and control signals for the transport layer, as known in the art. As shown in FIG. 1, signal processing element 190 further comprises the following processing elements: sync detection element 155, equalizer 160, forward error correction (FEC) decoder 165 and output formatter 170. Sync detection element recovers the segment sync signal and field sync signal and delivers information to the subsequent receiver blocks. Equalizer 160 compensates for linear distortion introduced into the received signal by the communication channel or additional filtering. FEC decoder 165 performs the functions of trellis decoding, deinterleaving, Reed-Solomon (RS) decoding and derandomizing. Finally, output formatter 170 delivers MPEG-2 serial or parallel data packets and control signals for the transport layer, via signal 171, for use by other components (not shown) of receiver 100.

Turning back to demodulator 150, and as shown in FIG. 1, this element comprises analog-to-digital converter (ADC) 105, automatic gain control (AGC) 110, carrier tracking loop (CTL 115), DC remover 120, pulse shaping element 125 and symbol timing loop (STL) 130. Input signal 101 is sampled (e.g., at a sampling rate of 25.14 MHz) by ADC 105 for conversion to a sampled signal, which is then gain controlled by AGC 110. The latter adjusts the signal power to stable levels despite external imparments like signal fading and provides gain controlled signal 114 to CTL 115. CTL 115 works at the sampling rate and downconverts gain controlled signal 114 to baseband and also corrects for any frequency offsets between the transmitter carrier and the receiver tuner Local Oscillator (LO) (not shown) to provide baseband signal 116 (a complex signal). DC remover 120 then removes any DC offset from baseband signal 116 that might result from the VSB pilot carrier downconversion. DC remover 120 is typically a Low Pass Filter (LPF) of very low bandwidth of, for example, 1KHz. DC remover 120 provides signal 121 to pulse shaping element 125, which is illustratively a root-raised cosine pulse shaping filter. The resulting pulse shaped signal is then provided to STL 130, which performs sample rate conversion to the average symbol rate of 10.76 MHz and provides demodulated signal 151.

As previously mentioned, receiver demodulator techniques generally have intrinsic carrier phase and/or symbol timing ambiguities due to their phase and time detector design. As a result, when the demodulator locks, the output sample it sends to subsequent blocks of the receiver may not have the correct and most appropriate value. This implies that subsequent blocks must correct for these possible ambiguities, be immune to these possible ambiguities or operate with substandard and possibly unacceptable performance. In fact, in order to achieve better and faster equalizer convergence, it is often desirable to correct for these demodulator ambiguities prior to equalization, particularly when the equalizer is a real (as opposed to complex), symbol-spaced (as opposed to fractionally-spaced) equalizer.

Therefore, and in accordance with the principles of the invention, a receiver comprises a filter for providing at least one DC-offset level associated with a signal; and a phase corrector for correcting a phase of the signal as a function of the at least one DC-offset level.

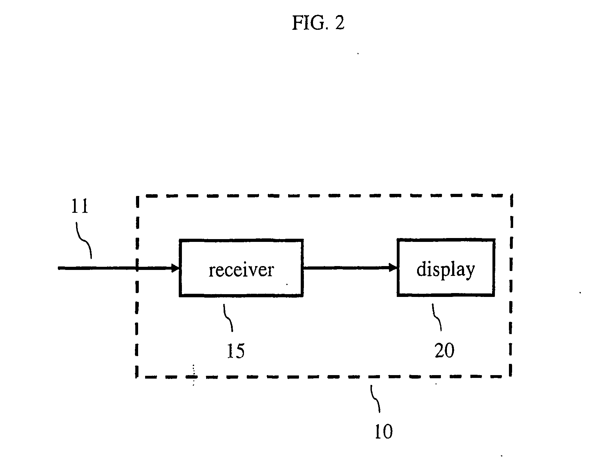

A high-level block diagram of an illustrative television set 10 in accordance with the principles of the invention is shown in FIG. 2. Television (TV) set 10 includes a receiver 15 and a display 20. Illustratively, receiver 15 is an ATSC-compatible receiver. It should be noted that receiver 15 may also be NTSC (National Television Systems Committee)-compatible, i.e., have an NTSC mode of operation and an ATSC mode of operation such that TV set 10 is capable of displaying video content from an NTSC broadcast or an ATSC broadcast. For simplicity in describing the inventive concept, only the ATSC mode of operation is described herein. Receiver 15 receives a broadcast signal 11 (e.g., via an antenna (not shown)) for processing to recover therefrom, e.g., an HDTV (high definition TV) video signal for application to display 20 for viewing video content thereon.

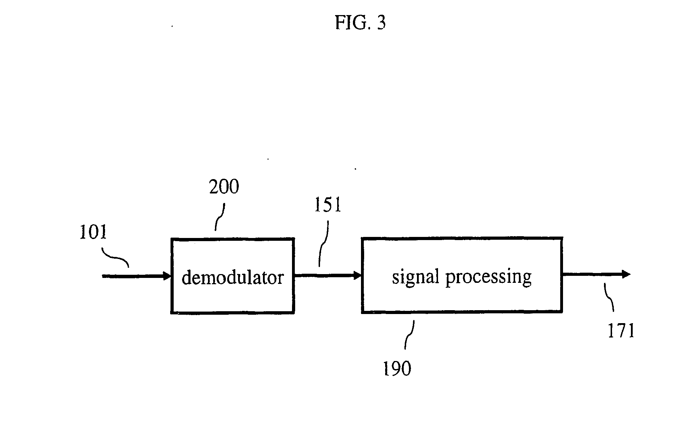

In accordance with the principles of the invention, receiver 15 includes a demodulator that corrects for carrier phase ambiguity. An illustrative block diagram of the relevant portion of receiver 15 is shown in FIG. 3. A demodulator 200 receives a signal 101 that is centered at an IF frequency ($F_{IF}$), or near baseband, and has a bandwidth equal to 6 MHz (millions of hertz). As described further below, demodulator 200 corrects for carrier phase ambiguity and provides a demodulated received ATSC-DTV signal 151 to signal processing element 190. The latter, as described above, processes demodulated signal 151 to provide output signal 171, which is representative of MPEG-2 serial or parallel data packets and control signals for the transport layer, as known in the art. In this illustrative embodiment, it is assumed that demodulator 200 corrects for a carrier phase ambiguity of 0°, 90°, 180° or 270°.

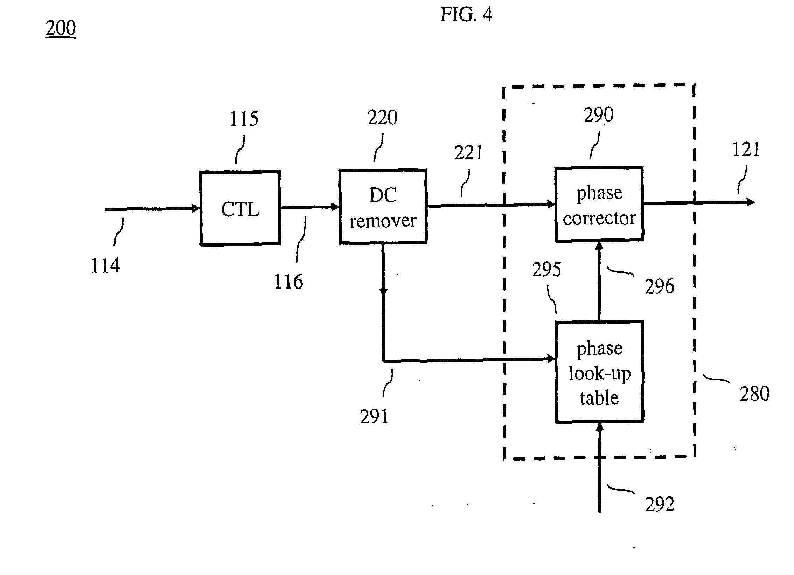

Referring now to FIG. 4, an illustrative block diagram of the relevant portion of demodulator 200 is shown. Demodulator 200 comprises CTL 115, DC remover 220 (also referred to herein as filter 220) and phase correction element 280. The latter comprises phase corrector 290 (also referred to herein as rotator 290) and phase look-up table 295. Other components of demodulator 200 not shown in FIG. 4 are similar to those described above and shown in FIG. 1.

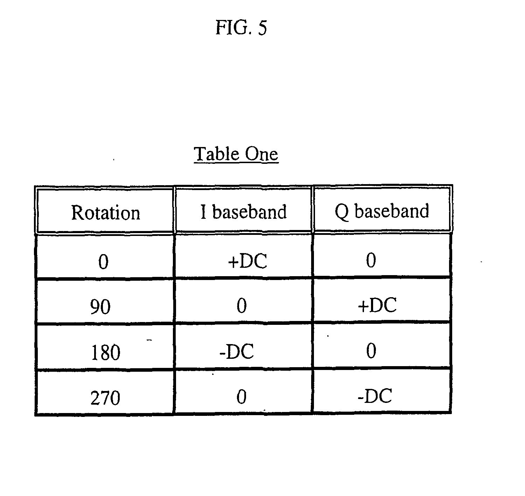

In accordance with the principles of the invention, demodulator 200 corrects for carrier phase ambiguity by using information from the VSB pilot carrier signal. In particular, the VSB specification (e.g., see the above-noted ATSC Document A/53) September 16, 1995) describes the pilot signal as a small carrier that is added to the VSB signal that is in phase with a zero degree (0°) phase reference. The purpose of the pilot signal is to be used as a lock reference for the demodulator. After CTL 115 is locked, the pilot signal shows as a constant "DC level" in baseband signal 116 and is subtracted out by DC remover 220. However, we have observed that in the case of a demodulator that provides both in-phase (I) and quadrature (Q) components in baseband signal 116 and because the pilot carrier signal shows as a DC level in the baseband output of the demodulator when locked, it is possible to determine the carrier phase rotation by observing the DC level polarity (+/-) and the particular component (I/Q) that contains the constant DC level signal. This is illustrated in Table One of FIG. 5, which illustrates for a particular degree of rotation the associated I and Q values. For example, if baseband signal 116 is rotated by 90°, the Q component of baseband signal 116 contains a positive (+) DC level, while if baseband signal 116 is rotated by 180°, the I component of baseband signal 116 contains a negative (-) DC level.

With respect to Table One, this table is derived by using the following equations:

$$I\ baseband = DC*(cos(Rotation) + j*sin(Rotation)), \text{ and} \qquad (1)$$

$$Qbaseband = DC*(sin(Rotation) + j*cos(Rotation)), \qquad (2)$$

where *DC* is equal to a constant value that is proportional to the level of the pilot signal and Rotation is equal to the stationary rotation value of the demodulator under a lock condition.

If the originally transmitted zero phase input baseband signal is:

$$Vs = Iin + j*Qin, \qquad (3)$$

then when the received signal is ambiguously rotated, the following results:

$$Vrotated = Vs * exp(j*Rotation), \qquad (4)$$

where *Vrotated* is baseband signal 116 of FIG. 4. As such, the received uncorrected signal is:

$$Vrotated = Iin' + j*Qin'. \qquad (5)$$

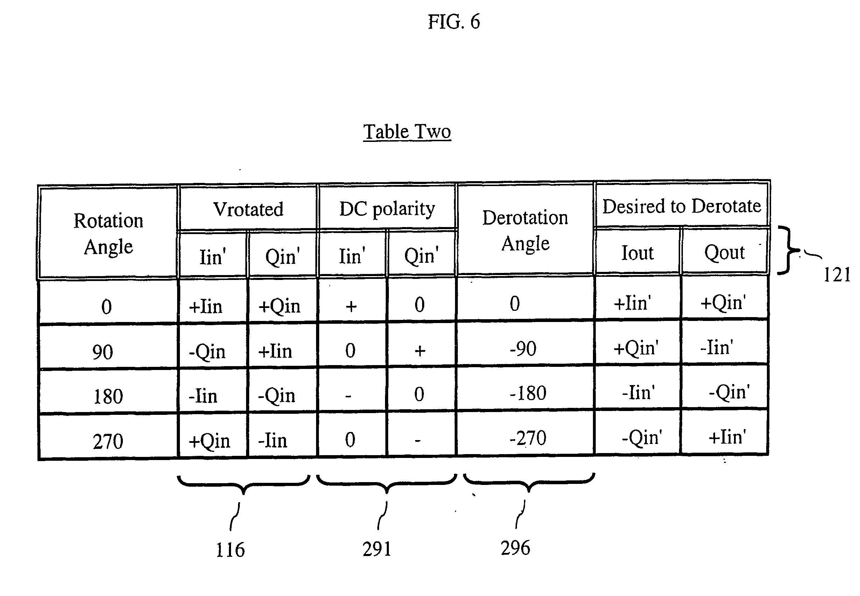

Turning now to Table Two of FIG. 6, this table further illustrates the operation of the elements shown in FIG. 4. As noted above from equation (5), baseband signal 116 has I and Q components designated as Iin' and Qin', respectively. DC remover 220 is a low pass filter that removes the DC-offset caused by the VSB pilot from baseband signal 116 and provides signal 221 to phase corrector 290 (this portion of DC remover 220 functions in a fashion similar to that of DC remover 120 of FIG. 1). In addition, DC remover 220 also provides a measurement of the DC polarity present on the I and Q components of baseband signal 116 to phase look-up table 295, via signal 291. Phase corrector 290 adjusts the phase of signal 221 (and therefore baseband signal 116) under the control of signal 296, which is determined by phase look-up table 295 in accordance with Table Two of FIG. 6. For example, if baseband signal 116 is rotated by 90°, the Q component of baseband signal 116 (Qin') contains a positive (+) DC level. In order to remove this ambiguity, phase look-up table 295 controls, via signal 296, phase corrector 290 of FIG. 4 to rotate signal 221 by a negative (-) 90°. As can be observed from Table Two of FIG. 6, this can be accomplished by phase corrector 290 setting the in-phase component, Iout, of signal 121 to the quadrature component, Qin', of signal 221 and setting the quadrature component, Qout, of signal 121 to the negative of the in-phase component, -Iin', of signal 221. (In this context, references herein to the in-phase and quadrature components of baseband signal 116 and signal 221 are interchangeable.) As another example, assume that the phase ambiguity of baseband signal 116 is 270°. In this case, there would be a negative DC offset in the quadrature component, Qin', of signal 116. To correct (derotate) for this rotation, phase look-up table 295 controls, via signal 296, phase corrector 290 of FIG. 4 to rotate signal 221 by a negative (-) 270°. As can be observed from Table Two of FIG. 6, this can be accomplished by phase corrector 290 setting the in-phase component, Iout, of signal 121 to the negative of the quadrature component, Qin', of signal 221, and setting the quadrature component, Qout, of signal 221 to the in-phase component, Iin', of signal 221.

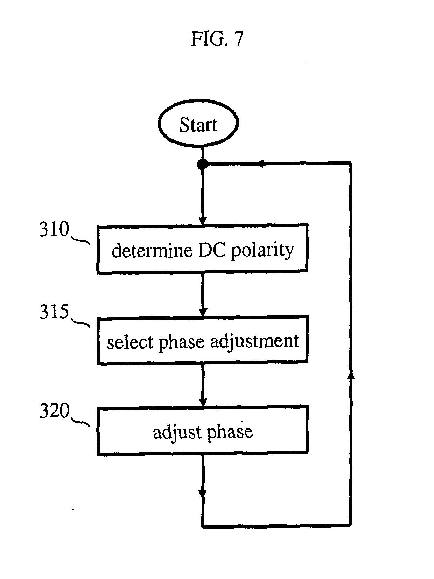

Turning briefly to FIG. 7, an illustrative flow chart in accordance with the principles of the invention for use in receiver 15 is shown. In step 310, the DC polarity for each component of a complex signal is determined. In step 315, a phase adjustment is selected as a function of the determined DC polarity. And, in step 320, the phase of the complex signal is adjusted in accordance with the selected phase adjustment.

Although the general operation of phase correction element 280 in accordance with the principles of the invention is as described above, it should be observed from FIG: 4 that phase correction element 280 has a control signal 292. Control signal 292 controls the mode of operation of phase correction element 280 and is provided by a processor (not shown) of receiver 15. In this example, phase correction element 280 has two modes of operation, a track mode and a hold mode. However, the inventive concept is not so limited. In the track mode, phase correction element 280 functions as described above and phase look-up table 295 determines the proper phase shift required to derotate baseband signal 116 and provides this determined phase shift to phase corrector 290 via signal 296. However, in the hold mode, phase correction element 280 does not track baseband signal 116 but, instead, holds the present phase adjustment. In particular, phase look-up table 295 holds the value present on signal 296 irrespective of the DC offset present in baseband signal 116. In other words, phase correction element 280 only tracks baseband signal 116 while in track mode. Illustratively, phase correction element 280 is in track mode when demodulator 200 is in acquisition mode. Once demodulator 200 has acquired and locked to input signal 101, phase correction element 280 is set to hold mode (e.g., by the above-noted processor (not shown)). This is to provide a stable output signal to the remaining blocks (not shown in FIG. 4) in receiver 15. It is presumed that once the demodulator 200 is locked to input signal 101, further processing (such as by equalizer 160 of signal processing element 190 (shown in FIG. 1)) will track any further changes in input signal 101. Thus, after demodulator 200 has acquired input signal 101, demodulator 200 remains stable in the hold mode until the receiver 15 loses lock and needs to reacquire.

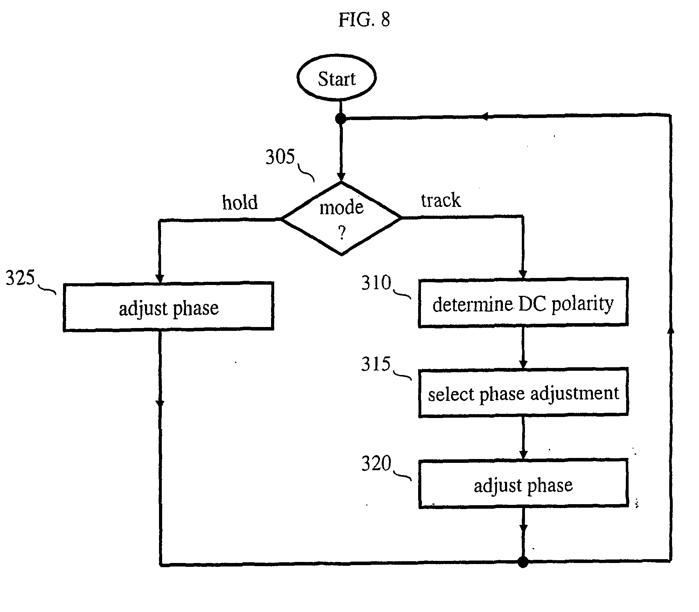

Referring now to FIG. 8, another illustrative flow chart in accordance with the principles of the invention for use in receiver 15 is shown in the context of the above-described track and hold modes of operation. The flow chart of FIG. 8 is similar to the flow chart of FIG. 7 except for the additions of step 305 and 325. In step 305, the mode of operation is determined. If the mode of operation is the track mode, then steps 310, 315 and 320 are performed as described earlier. However, if the mode of operation is the hold mode, then the phase of the complex signal is adjusted in step 325 in accordance with the last selected phase adjustment and is independent of the current DC polarity of the complex signal.

It should be noted that the in-phase and quadrature value for DC polarity shown in Tables One and Two represent ideal conditions of a perfect input signal. In reality, it is possible for either or both of these values to be non-zero due to noise and other non-ideal conditions. In other words, in the DC Polarity entries of Table Two a value of zero (0) actually can have a low DC value due to noise, etc. As such, in order to handle this possibility, phase correction element 280 uses the magnitudes of the DC polarity values and compares them to see which signal is the furthest from a value of zero. Once this is determined, phase correction element 280 checks the component of baseband signal 116 that has the value furthest from zero to see if it is positive or negative and, thus, determine which entry to use in Table Two. In other words, the lower of the two values is treated as zero and the higher of the two values is treated as "DC".

Although the inventive concept was described in terms of a VSB demodulator, the inventive concept may be applied to any digital demodulator with carrier phase ambiguities for which one or more pilot carriers or full carriers are present at the transmitted signal. Likewise the inventive concept is applicable not only to digital systems but analog as well. In addition, other variations are possible. For example, detector 280 may be located at other positions within the receiver, such as after STL 130 of FIG. 1, etc.

As such, the foregoing merely illustrates the principles of the invention and it will thus be appreciated that those skilled in the art will be able to devise numerous alternative arrangements. For example, although illustrated in the context of separate functional elements, these functional elements may be embodied on one or more integrated circuits (ICs). Similarly, although shown as separate elements, any or all of the elements of may be implemented in a stored-program-controlled processor, e.g., a digital signal processor, which executes associated software, e.g., corresponding to one or more of the steps shown, e.g., in FIG. 7, etc. Further, although shown as elements bundled within TV set 10, the elements therein may be distributed in different units in any combination thereof. For example, receiver 15 of FIG. 2 may be a part of a device, or box, such as a set-top box that is physically separate from the device, or box, incorporating display 20, etc: Also, it should be noted that although described in the context of terrestrial broadcast, the principles of the invention are applicable to other types of communications systems, e.g., satellite, cable, etc. It is therefore to be understood that numerous modifications may be made to the illustrative embodiments and that other arrangements may be devised without departing from the scope of the present invention as defined by the appended claims.

**Claims**

1. A receiver, comprising:

   a downconverter for downconverting a received signal that includes a pilot signal to provide a downconverted signal having a DC-offset level resulting from the downconversion of the received pilot signal, **characterised by** a filter for removing the DC-offset level from the downcoverted signal to provide a filtered signal; and a phase corrector for correcting a phase of the filtered signal as a function of the DC-offset level of the downconverted signal.

2. The receiver of claim 1, wherein the phase corrector comprises:

   a look-up table for providing a carrier phase correction value from the DC-offset level; and a rotator for rotating the filtered signal by the carrier phase correction value to correct the phase.

3. The receiver of claim 1, wherein the received signal represents an ATSC-DTV, Advanced Television Systems Committee-Digital Television, signal.

4. The receiver of claim 1, wherein the received signal is a complex signal having an in-phase component and a quadrature component and the downconverter provides a DC-offset level for each component.

5. The receiver of claim 1, wherein the DC-offset level represents a phase ambiguity associated with the received signal; and wherein the phase corrector has a hold mode of operation such that in the hold mode of operation the phase corrector does not track the phase ambiguity of the received signal.

6. A method for use in a receiver, comprising:

   (a) downconverting a received signal that includes a pilot signal to provide a downconverted signal having a DC-offset level resulting from the downconversion of the received pilot signal, **characterised by** (b) filtering the downconverted signal for removing the DC-offset level to provide a filtered signal; and (c) correcting a phase of the filtered signal as a function of the DC-offset level of the downconverted signal.

7. The method of claim 6, wherein the correcting step includes:

   addressing a look-up table with the DC-offset level for providing a carrier phase correction value; and rotating the filtered signal by the carrier phase correction value to correct the phase.

8. The method of claim 6, wherein the received signal represents an ATSC-DTV, Advanced Television Systems Committee-Digital Television, signal.

9. The method of claim 6, wherein the received signal is a complex signal having an in-phase component and a quadrature component and the downconverting step provides a DC-offset level for each component.

10. The method of claim 6, wherein the DC-offset level represents a phase ambiguity associated with the received signal; and further comprising the step of:

    selecting one of a number of modes of operation,

    wherein at least one mode of operation is a track mode such that when the track mode is selected step (c) tracks the phase ambiguity of the received signal, and wherein another mode is a hold mode such that such that when the hold mode is selected step (c) does not track the phase ambiguity of the received signal.

**Patentansprüche**

1. Empfänger, mit:

einem Abwärtsumsetzer zum Abwärtsumsetzen eines empfangenen Signals, das ein Pilotsignal enthält, um ein abwärts umgesetztes Signal bereitzustellen, das einen Gleichspannungsversatzpegel besitzt, der sich aus der Abwärtsumsetzung des empfangenen Pilotsignals ergibt,

**gekennzeichnet durch**

ein Filter zum Entfernen des Gleichspannungsversatzpegels aus dem abwärts umgesetzten Signal, um ein gefiltertes Signal bereitzustellen; und

eine Phasenkorrektureinrichtung zum Korrigieren einer Phase des gefilterten Signals als eine Funktion des Gleichspannungsversatzpegels des abwärts umgesetzten Signals.

2. Empfänger nach Anspruch 1, wobei die Phasenkorrektureinrichtung enthält:

eine Nachschlagetabelle zum Bereitstellen eines Trägerphasen-Korrekturwertes aus dem Gleichspannungsversatzpegel; und

einen Rotator zum Drehen des gefilterten Signals um den Trägerphasen-Korrekturwert, um die Phase zu korrigieren.

3. Empfänger nach Anspruch 1, wobei das empfangene Signal ein ATSC-DTV-Signal oder *Advanced Television Systems Commitee - Digital Television -* Signal repräsentiert.

4. Empfänger nach Anspruch 1, wobei das empfangene Signal ein komplexes Signal mit einer phasengleichen Komponente und einer Quadraturkomponente ist und der Abwärtsumsetzer einen Gleichspannungsversatzpegel für jede Komponente bereitstellt.

5. Empfänger nach Anspruch 1, wobei der Gleichspannungsversatzpegel eine dem empfangenen Signal zugeordnete Phasenunbestimmtheit repräsentiert; und

wobei die Phasenkorrektureinrichtung eine Haltebetriebsart besitzt, derart, dass in der Haltebetriebsart die Phasenkorrektureinrichtung die Phasenunbestimmtheit des empfangenen Signals nicht verfolgt.

6. Verfahren für die Verwendung in einem Empfänger, das enthält:

(a) Abwärtsumsetzen eines empfangenen Signals, das ein Pilotsignal enthält, um ein abwärts umgesetztes Signal bereitzustellen, das einen Gleichspannungsversatzpegel besitzt, der sich aus der Abwärtsumsetzung des empfangenen Pilotsignals ergibt,

**gekennzeichnet durch**

(b) Filtern des abwärts umgesetzten Signals, um den Gleichspannungsversatzpegel zu entfernen, um ein gefiltertes Signal bereitzustellen; und

(c) Korrigieren einer Phase des gefilterten Signals als Funktion des Gleichspannungsversatzpegels des abwärts umgesetzten Signals.

7. Verfahren nach Anspruch 6, wobei der Korrekturschritt enthält:

Adressieren einer Nachschlagetabelle mit dem Gleichspannungsversatzpegel, um einen Trägerphasen-Korrekturwert bereitzustellen; und

Drehen des gefilterten Signals um den Trägerphasenkorrekturwert, um die Phase zu korrigieren.

8. Verfahren nach Anspruch 6, wobei das empfangene Signal ein ATSC-DTV-Signal oder *Advanced Television Systems Commitee - Digital Television -* Signal repräsentiert.

9. Verfahren nach Anspruch 6, wobei das empfangene Signal ein komplexes Signal mit einer phasengleichen Komponente und einer Quadraturkomponente ist und der Abwärtsumsetzungsschritt einen Gleichspannungsversatzpegel für jede Komponente bereitstellt.

10. Verfahren nach Anspruch 6, wobei der Gleichspannungsversatzpegel eine dem empfangenen Signal zugeordnete Phasenunbestimmtheit repräsentiert; und das ferner den folgenden Schritt umfasst:

Auswählen einer von zahlreichen Betriebsarten,

wobei wenigstens eine Betriebsart eine Verfolgungsbetriebsart ist, derart, dass bei ausgewählter Verfolgungsbetriebsart der Schritt (c) die Phasenunbestimmtheit des empfangenen Signals verfolgt, und
wobei eine weitere Betriebsart eine Haltebetriebsart ist, derart, dass bei ausgewählter Haltebetriebsart der Schritt
(c) die Phasenunbestimmtheit des empfangenen Signals nicht verfolgt.

**Revendications**

1. Récepteur, comprenant :

   un convertisseur abaisseur de fréquence pour abaisser en fréquence un signal reçu qui comporte un signal
   pilote afin de fournir un signal abaissé en fréquence ayant un niveau de décalage en continu résultant de
   l'abaissement en fréquence du signal pilote reçu, **caractérisé par**
   un filtre pour supprimer le niveau de décalage en continu du signal abaissé en fréquence afin de fournir un
   signal filtré ; et
   un correcteur de phase pour corriger une phase du signal filtré en fonction du niveau de décalage en continu
   du signal abaissé en fréquence.

2. Récepteur selon la revendication 1, dans lequel le correcteur de phase comprend :

   une table de consultation pour fournir une valeur de correction de phase de porteuse à partir du niveau de
   décalage en continu ; et
   un rotateur pour tourner le signal filtré par la valeur de correction de phase de porteuse afin de corriger la phase.

3. Récepteur selon la revendication 1, dans lequel le signal reçu représente un signal ATSC-DTV (Advanced Television
   Systems Committee-Digital Television).

4. Récepteur selon la revendication 1, dans lequel le signal reçu est un signal complexe ayant une composante en
   phase et une composante en quadrature et le convertisseur abaisseur de fréquence fournit un niveau de décalage
   en continu pour chaque composante.

5. Récepteur selon la revendication 1, dans lequel le niveau de décalage en continu représente une ambiguïté de
   phase associée au signal reçu ; et dans lequel le correcteur de phase a un mode de fonctionnement de maintien
   de telle sorte que dans le mode de fonctionnement de maintien le correcteur de phase ne suive pas l'ambiguïté de
   phase du signal reçu.

6. Procédé destiné à être utilisé dans un récepteur, comprenant :

   (a) la conversion par abaissement de fréquence d'un signal reçu qui comporte un signal pilote afin de fournir
   un signal abaissé en fréquence ayant un niveau de décalage en continu résultant de l'abaissement en fréquence
   du signal pilote reçu, **caractérisé par**
   (b) le filtrage du signal abaissé en fréquence pour supprimer le niveau de décalage en continu afin de fournir
   un signal filtré ; et
   (c) la correction de phase du signal filtré en fonction du niveau de décalage en continu du signal abaissé en
   fréquence.

7. Procédé selon la revendication 6, dans lequel l'étape de correction comporte :

   l'adressage d'une table de consultation avec le niveau de décalage en continu pour fournir une valeur de
   correction de phase de porteuse ; et
   la rotation du signal filtré par la valeur de correction de phase de porteuse afin de corriger la phase.

8. Procédé selon la revendication 6, dans lequel le signal reçu représente un signal ATSC-DTV (Advanced Television
   Systems Committee-Digital Television) .

9. Procédé selon la revendication 6, dans lequel le signal reçu est un signal complexe ayant une composante en phase
   et une composante en quadrature et l'étape de conversion par abaissement de fréquence fournit un niveau de
   décalage en continu pour chaque composante.

**10.** Procédé selon la revendication 6, dans lequel le niveau de décalage en continu représente une ambiguïté de phase associée au signal reçu ; et comprenant en outre l'étape de :

sélection de l'un d'un nombre de modes de fonctionnement,
dans lequel au moins un mode de fonctionnement est un mode de suivi de telle sorte que quand le mode de suivi est sélectionné l'étape (c) suit l'ambiguïté de phase du signal reçu, et
dans lequel un autre mode est un mode de maintien de telle sorte que lorsque le mode de maintien est sélectionné l'étape (c) ne suit pas l'ambiguïté de phase du signal reçu.

FIG. 1

*Prior Art*

100

105    110    115    120    125    130

101

| ADC | AGC | CTL | DC remover | pulse shaping | STL |

114    116    121    demodulator

150

151

Sync detection → equalizer → FEC decoder → output formatter

190    155    160    165    170

171

EP 1 745 625 B1

FIG. 2

FIG. 3

EP 1 745 625 B1

FIG. 4

200

EP 1 745 625 B1

FIG. 5

Table One

| Rotation | I baseband | Q baseband |
|----------|------------|------------|
| 0 | +DC | 0 |
| 90 | 0 | +DC |
| 180 | -DC | 0 |
| 270 | 0 | -DC |

EP 1 745 625 B1

FIG. 6

Table Two

| Rotation Angle | Vrotated | | DC polarity | | Derotation Angle | Desired to Derotate | |
|---|---|---|---|---|---|---|---|
| | Iin' | Qin' | Iin' | Qin' | | Iout | Qout |
| 0 | +Iin | +Qin | + | 0 | 0 | +Iin' | +Qin' |
| 90 | -Qin | +Iin | 0 | + | -90 | +Qin' | -Iin' |
| 180 | -Iin | -Qin | - | 0 | -180 | -Iin' | -Qin' |
| 270 | +Qin | -Iin | 0 | - | -270 | -Qin' | +Iin' |

121

116          291          296

EP 1 745 625 B1

FIG. 7

```
                          ┌─────────┐
                          │  Start  │
                          └────┬────┘
                               │
                               ●──────────────────────────┐
                               │                          │
                               ▼                          │
                    ┌──────────────────────┐              │
              310 ──│  determine DC polarity │              │
                    └──────────┬───────────┘              │
                               │                          │
                               ▼                          │
                    ┌──────────────────────┐              │
              315 ──│ select phase adjustment│              │
                    └──────────┬───────────┘              │
                               │                          │
                               ▼                          │
                    ┌──────────────────────┐              │
              320 ──│     adjust phase      │              │
                    └──────────┬───────────┘              │
                               │                          │
                               └──────────────────────────┘
```

EP 1 745 625 B1

FIG. 8

```
                    ( Start )
                        |
                        |
   305 ⟍                |
                        ▼
        hold       ╱ mode ╲      track
    ◄───────────  ╱   ?    ╲  ───────────►
                  ╲       ╱
                   ╲     ╱
                      |                              |
                      ▼                              ▼
   325 ⟍                            310 ⟍
   ┌──────────────────┐             ┌──────────────────────┐
   │   adjust phase   │             │ determine DC polarity│
   └──────────────────┘             └──────────────────────┘
                                                |
                                    315 ⟍       ▼
                                    ┌──────────────────────┐
                                    │ select phase adjustment│
                                    └──────────────────────┘
                                                |
                                    320 ⟍       ▼
                                    ┌──────────────────────┐
                                    │     adjust phase     │
                                    └──────────────────────┘
```